# EUROPÄISCHE PATENTSCHRIFT

(11) **EP 0 709 705 B1**
(45) Veröffentlichungstag und Bekanntmachung des Hinweises auf die Patenterteilung: **22.01.2003**
(21) Anmeldenummer: 95117092.7
(22) Anmeldetag: 30.10.1995
(51) Int. Cl.: G02B 23/00, G02B 23/10, F41G 3/06, F41G 3/32

(54) **Zielfernrohr**
Telescopic sight
Lunette de visée

(30) Priorität: 31.10.1994 DE 4438955
(43) Veröffentlichungstag der Anmeldung: 01.05.1996
(73) Patentinhaber: SWAROVSKI OPTIK KG, 6067 Absam (AT)
(72) Erfinder: Pernstich, Ludwig, Dipl.-Ing., A-6020 Rum b. Innsbruck (AT); Seil, Konrad, Dr., A-6130 Schwaz (AT); Menges, Dietmar F.H., Dipl.-Ing., A-6020 Innsbruck (AT)
(74) Vertreter: Kador & Partner

(56) Entgegenhaltungen:
- EP-A- 0 003 085
- EP-A- 0 036 099
- EP-A- 0 165 170
- DE-A- 3 501 321
- PATENT ABSTRACTS OF JAPAN vol. 007, no. 113 (P-197), 18. Mai 1983 & JP 58 034420 A (BOEICHO GIJUTSU KENKYU HONBU;OTHERS: 0J), 28. Februar 1983
- PATENT ABSTRACTS OF JAPAN vol. 015, no. 406 (P-1263), 16. Oktober 1991 & JP 03 163511 A (TOKYO SUKOOPU:KK;OTHERS: 03), 15. Juli 1991

## Beschreibung

Die Erfindung bezieht sich auf ein Zielfernrohr für insbesondere handgehaltene Schußwaffen.

Damit insbesondere nach der Montage des Zielfernrohres auf dem Gewehr der Zielpunkt mit dem Treffpunkt in Übereinstimmung gebracht werden kann, ist bei den bekannten Zielfernrohren die Zielmarke im allgemeinen in der Brennebene des Objektivs und des Okulars angeordnet, gegenüber dem Hauptrohr des Zielfernrohres beweglich gelagert und mit zwei senkrecht zueinander angeordneten Justierspindeln justierbar (vgl. DE 32 08 814 C2).

Auch bei justiertem Zielfernrohr fallen aufgrund der Flugbahn des Geschosses der Zielpunkt und Treffpunkt aber nur bei der Entfernung zusammen, auf die das Gewehr eingeschossen ist. Bei einer kürzeren Entfernung als der Einschußentfernung liegt der Treffpunkt dagegen über dem Zielpunkt und bei einer größeren darunter.

Zwar kennt der Jäger oder sonstiger Anwender meistens in einem für die Praxis ausreichendem Maß die ballistischen Leistungen der Waffe und des verwendeten Geschosses und damit die Größe der Abweichung zwischen Treffpunkt und Zielpunkt in Abhängigkeit von der Größe der Abweichung der tatsächlichen Schußentfernung von der Einschießentfernung. Es bereitet jedoch insbesondere in fremden, ungewohntem Gelände oft erhebliche Schwierigkeiten, die tatsächliche Entfernung zum Ziel hinreichend genau zu schätzen. Schätzfehler um mehr als das Doppelte sind keine Seltenheit.

Zur genauen Entfernungsmessung werden deshalb für die Jagd bereits Laserentfernungsmeßgeräte eingesetzt (Firmenprospekt: Laser Rangefinder RF1, Swarovski Optik K. G.). Laserentfernungsmesser beruhen auf dem Prinzip der Laufzeitmessung eines Laserimpulses bzw. einer Laserimpulsfolge, die vom Lasersender ausgesandt wird. Der Laserimpuls oder die Impulsfolge wird vom anvisierten Ziel reflektiert. Ein Teil dieses reflektierten Lichts trifft den Laserempfänger. Das daraus resultierende Empfangssignal beendet die Laufzeitmessung. Die Hälfte dieser Zeit, dividiert durch die konstante Lichtgeschwindigkeit, ergibt die Entfernung des anvisierten Zieles.

Die gleichen Nachteile weist das in einem Gehäuse außerhalb des Zielfernrohres angeordnete Laserentfernungsmessgerät nach DE 42 18 118 A1 auf.

Die heutzutage eingesetzten Laserentfernungsmeßgeräte weisen für den Lasersender und den Laserempfänger getrennte Strahlengänge mit getrennten Objektiven auf. Sie sind daher voluminös und schwer. Auch ist es unpraktisch, das Ziel vor dem Schuß zweimal anvisieren zu müssen, nämich einmal mit der Zielmarke des Laserentfernungsmessgeräts, um die Schießentfernung zu ermitteln, und dann mit der Zielmarke des Zielfernrohres.

Aufgabe der Erfindung ist es daher, ein Zielfernrohr mit integriertem Laserentfernungsmesser bereitszustellen.

Dies wird erfindungsgemäß dadurch erreicht, daß das Zielfernrohrobjektiv durch Einbringen des Strahlengangs des Lasersenders und des Strahlengangs des Laserempfängers in den visuellen Zielfernrohrstrahlengang zugleich das Objektiv für den Lasersender und den Laserempfänger bildet, und daß die Einrichtung zur Justierung der Zielmarke auf den Treffpunkt ein gegenüber der Waffe bewegbares optisches Teil zwischen der Zielmarke und der Lichteintrittsseite des Zielfernrohres aufweist.

Nach der Erfindung wird der Strahlengang des Lasersenders und der Strahlengang des Laserempfängers in den visuellen Strahlengang des Zielfernrohres eingebracht. Damit stellt das Zielfernrohrobjektiv zugleich das Objektiv für den Lasersender und den Laserempfänger dar. Damit ist eine kompakte, gewichtssparende Integration des Laserentfernungsmessers in das Zielfernrohr realisierbar.

Die Visierlinie des Zielfernrohres und die optische Achse des darin integrierten Laserentfernungsmessers müssen genau zusammenfallen, damit der Laserentfernungsmesser die Entfernung zu dem mit der Zielmarke des Zielfernrohres anvisierten Ziel und nicht zu einem dem Ziel benachbarten Objekt mißt. Andererseits erfolgt die Einbringung des Strahlengangs des Lasersenders und des Laserempfängers in den Strahlengang des Zielfernrohres zwischen Objektiv und Zielmarke des Zielfernrohres. D. h., wenn die Justierung der Zielmarke auf den Treffpunkt beim Einschießen des Gewehres durch Bewegung der Zielmarke erfolgen würde, wie bei den bekannten Zielfernrohren, würde dadurch lediglich die Visierlinie auf den Zielpunkt justiert, nicht aber die optische Achse des Laserentfernungsmessers, so daß der Laserentfernungsmesser nicht die Entfernung zum anvisierten Ziel sondern zu einem dazu benachbarten Gegenstand messen würde.

Um dies zu verhindern, weist erfindungsgemäß die Einrichtung zur Justierung der Zielmarke auf den Treffpunkt ein gegenüber der Waffe bewegbares, optisches Teil auf, das zwischen der Zielmarke und der Lichteintrittsseite des Zielfernrohres angeordnet ist.

Dieses gegenüber der Waffe bewegbare optische Teil der Jusitereinrichtung wird vorzugsweise durch wenigstens eine Teillinse des Objektivs gebildet, kann freilich aber auch das gesamte Objektiv sein. Zur Bewegung der Teillinse bzw. des gesamten Objektivs können zwei, im senkrechten Winkel zueinander angeordnete Justierspindeln vorgesehen sein.

Auch ist es möglich, das gegenüber der Waffe bewegbare Objektivteil aus Scheibe auszubilden, welche schräg zueinander verlaufende Basisflächen aufweist, um die optische Achse des Objektivs drehbar ist und mit einer komplementären Scheibe zusammenwirkt.

Bei Justierung der Zielmarke auf den Treffpunkt beim Einschießen der Waffe werden damit durch Bewegung des Objektivs bzw. Objektivteils der visuelle Strahlengang des Zielfernrohres und der Strahlengang des Laserentfernungsmessers gemeinsam verstellt.

Bei dem erfindungsgemäßen Zielfernrohr ist die Zielmarke also vorzugsweise starr gegenüber dem Außenrohr, d.h. gewehrfest angeordnet im Gegensatz zu den meisten herkömmlichen Zielfernrohren.

Zum Einbringen des Strahlengangs des Lasersenders und des Strahlengangs des Laserempfängers in den visuellen Zielfernrohrstrahlengang ist jeweils eine, das Laserlicht selektiv reflektierende Reflexionsfläche im visuellen Zielfernrohrstrahlengang angeordnet. Die Reflexionsfläche kann durch einen Spiegel oder durch ein Prisma gebildet werden.

Zur laserlichtselektiven Reflexion kann die Reflexionsfläche eine Beschichtung aufweisen, die das langwellige Laserlicht mit einer Wellenlänge von z. B. ca. 0,9 µm reflektiert, das sichtbare Licht aber durchläßt.

Der Strahlengang des Lasersenders und der Strahlengang des Laserempfängers können koaxial in den visuellen Zielfernrohrstrahlengang eingebracht werden. Die beiden Reflexionsflächen für den Lasersender bzw. Laserempfänger sind in der optischen Achse des Objektivs dann hinterinander angeordnet. Wenn die Reflexionsfläche für den Lasersender dann objektivseitig und die Reflexionsfläche für den Laserempfänger zielmarkenseitig angeordnet ist, bildet der Laserempfänger einen zur optischen Achse des Objektivs koaxialen Strahlenkegel, der im koaxialen Strahlenkegelmantel des Laserempfängers angeordnet ist.

Statt einer koaxialen Anordnung des visuellen Strahlengangs, des Strahlengangs des Lasersenders und des Strahlengangs des Laserempfängers ist es auch möglich, den Strahlengang des Lasersenders z. B. in eine, also beispielsweise die untere Hälfte des visuellen Zielfernrohrstrahlengangs einzuspiegeln, und den Strahlengang des Laserempfängers in die andere, also beispielsweise obere Hälfte des visuellen Zielfernrohrstrahlengangs.

Das erfindungsgemäße Zielfernrohr besitzt ferner vorzugsweise eine Digitalanzeige für die von dem Laserentfernungsmesser gemessene Entfernung des Zieles, welche in den visuellen Zielfernrohrstrahlengang eingespiegelt wird. Dazu ist eine Reflexionsfläche in dem visuellen Zielfernrohrstrahlengang angeordent, und zwar vorzugsweise zwischen der Zielmarke einerseits und den beiden Reflexionsflächen für den Lasersender bzw. -empfänger andererseits.

Damit die Digital- oder sonstige optische Entfernungsanzeige die Durchsicht durch das Zielfernrohr möglichst wenig beeinträchtigt, kann die optische Anzeige Licht im langwelligen Bereich des sichtbaren Lichts, z. B. von mehr als 0,65 µm aussenden und die Reflexionsfläche im visuellen Zielfernrohrstrahlengang zum Einspiegeln der optischen Anzeige eine Beschichtung aufweisen, die ein Licht dieser Längenwelle, also von 0,65 µm und mehr reflektiert, sichtbares Licht mit einer darunter liegenden Längenwelle, also einer Längenwelle von weniger als 0,65 µm aber durchläßt. Statt dessen kann die optische Entfernungsanzeige in den visuellen Zielfernrohrstrahlengang auch mit einer für sichbares Licht teildurchlässigen Reflexionsfläche eingespiegelt werden, wobei die optische Anzeige dann auch ein Licht mit einer Wellenlänge des gesamten sichtbaren Bereichs, also z. B. weißes Licht, aussenden kann, was allerdings einen geringen Helligkeitsverlust bedingen kann.

Zur Vereinfachung der Montage des erfindungsgemäßen Zielfernrohres ist vorzugsweise ein Bauteilträger vorgesehen, der in das Außenrohr des Zielfernrohres eingeschoben wird. Abgesehen vom Objektiv und der Justiereinrichtung können praktisch alle anderen Bauteile des Zielfernrohres an dem Bauteilträger befestigt sein, also z. B. der Lasersender und der Laserempfänger mit der gesamten Optik zum Einspiegeln des Lasersenders bzw. des Laserempfängers in den visuellen Zielfernrohstrahlengang, der gesamten Steuer- und Auswertelektronik des Laserentfernungsmessers, der optischen Entfernungsanzeige mit der Optik zum Einspiegeln der optischen Entfernungsanzeige in den visuellen Strahlengang des Zielfernrohres, sowie die Zielmarke und das Okulars des Zielfernrohres. Dies hat den großen Vorteil, daß alle Justier- und Prüfvorgänge vorgenommen werden können, bevor die Montage des Objektivs erfolgt.

Für die Steuer- und Auswertelektronik des Laserentfernungsmessers sind vorzugsweise Platinen vorgesehen, die um den Bauteilträger angeordnet sind. Dazu weist der Bauteilträger vorzugsweise einen rechteckigen, insbesondere quadratischen Querschnitt auf oder einen anderen prismatischen Querschnitt, beispielsweise einen sechseckigen Querschnitt, wobei die Platinen auf den Außenflächen des prismatischen Bauteilträgers angeordnet sind.

Zur Aufnahme der Zielmarke, des Umkehrsystems und des Okulars des Zielfernrohres weist der Bauteilträger vorzugsweise eine koaxiale Innenbohrung oder einen Kanal auf.

Um den Treffpunkt mit dem Zielpunkt in Abhängigkeit von der mit dem Entfernungsmesser gemessenen Zielentfernung in Übereinstimmung zu bringen, ist es bekannt, die Zielmarke über Ballistikrechner mit einem Stellmotor zu justieren. Bei der Ausführungsform nach Anspruch 7 kann deshalb z.B. jede der beiden, zueinander senkrecht angeordneten Justierspindeln mit einem solchen Stellmotor betätigt werden. Damit in die Steuerung der Justiereinrichtung durch den bzw. die Stellmotoren die ballistischen Daten der Waffe und der Munition eingehen, ist ein mit diesen Daten speicherbarer, elektronischer Speicher vorgesehen, ferner ein Rechner, der die Signale der Auswertelektronik des Laserentfernungsmesser mit den gespeicherten Daten verknüpft.

Nachstehend ist eine Ausführungsform des erfindungsgemäßen Zielfernrohres anhand der Zeichnung näher erläutert. Darin zeigen:
Figur 1 eine perpektivische Ansicht des Zielfernrohres;
Figur 2 eine teilweise längsgeschnittene Ansicht des Zielfernrohres nach Figur 1;
Figur 2a eine Variante der Einrichtung zur Justierung der Zielmarke;
Figur 3 einen Querschnitt entlang der Linie III - III in Figur 2, wobei die außen am Außenrohr angebrachten Teile weggelassen sind; und
Figur 4 eine Darstellung des visuellen Zielfernrohrstrahlengang in Durchsichtrichtung ab der Zielmarke sowie des Strahlengangs des Lasersenders und des Laserempfängers des Laserentfernungsmessers und den Strahlengang der optischen Entfernungsanzeige.

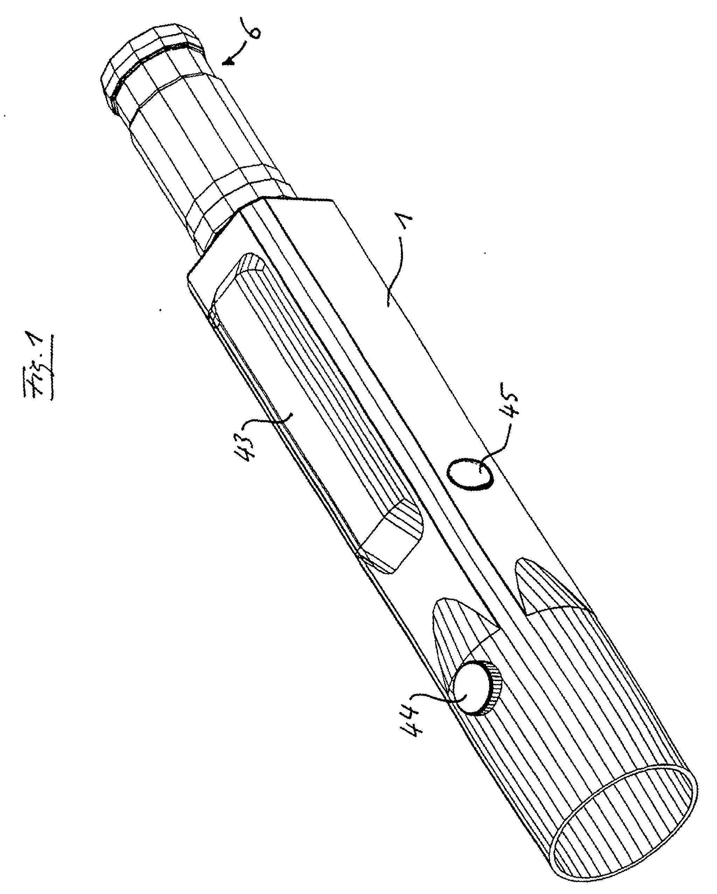

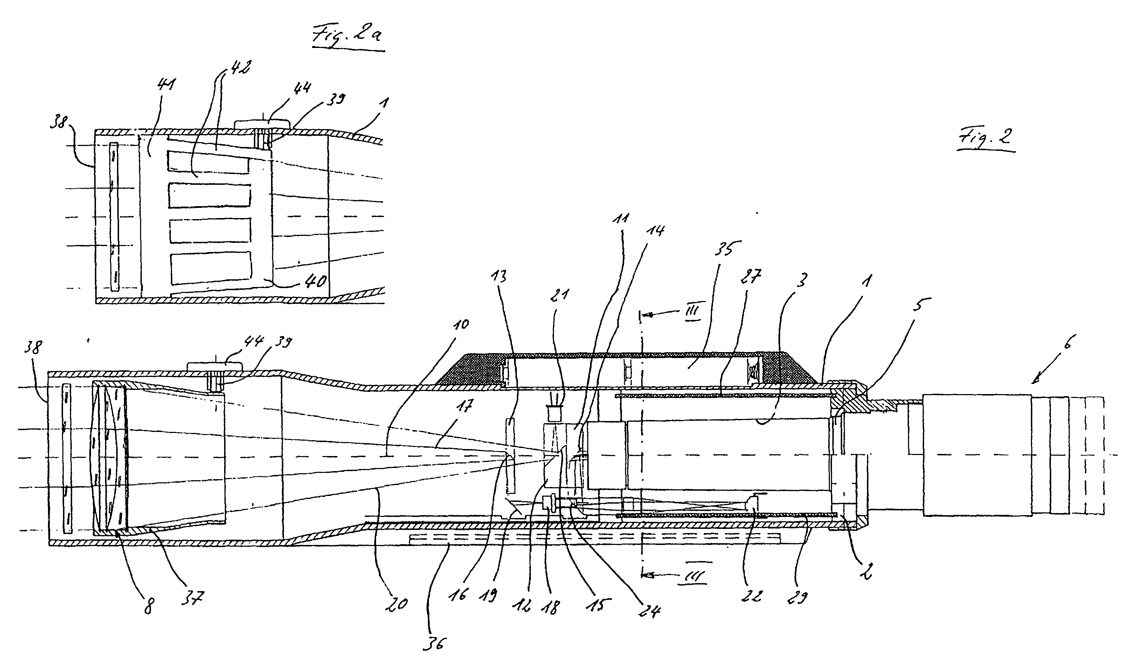

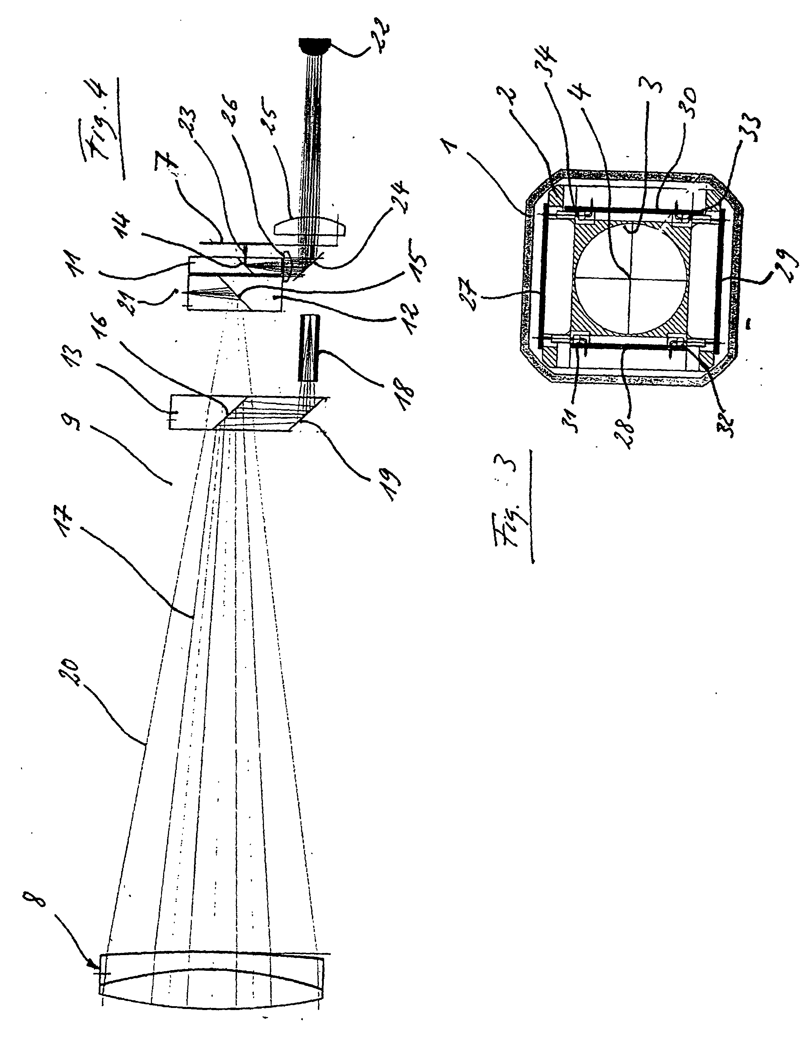

Gemäß Figuren 2 und 3 weist das Zielfernrohr ein Außenrohr 1 auf, in dem ein Bauteilträger 2 angeordnet ist. Im Bauteilträger 2 ist ein koaxialer Kanal 3 mit der als Fadenkreuz ausgebildeten Zielmarke 4 vorgesehen. In den Kanal 3 ist ferner das Umkehrsystem des Zielfernrohres angeordnet.

Die Zielmarke 4 und das Umkehrsystem sind vorzugsweise in einem Innenrohr 5 angeordnet, das in den Kanal 3 gesteckt ist. An das Innenrohr 5 schließt sich das Okular 6 an. Das Umkehrsystem kann für eine konstante oder eine variable Vergrößerung ausgelegt sein.

Die Zielmarke 4 ist in der Brennebene 7 des Objektivs 8 angeordnet. (Figur 4)

Die optische Achse des visuellen Zielfernrohrstrahlenganges ist mit 10 bezeichnet. Zwischen der Radialebene mit der Zielmarke 4 und dem Objektiv 8 sind in Durchsichtsrichtung des Zielfernrohres im visuellen Zielfernrohrstrahlengang, also dem Strahlenbündel 9 des Objektivs 8, hintereinander drei jeweils als Prismen ausgebildete Strahlteiler 11 bis 13 vorgesehen, die jeweils eine Reflexionsfläche 14 bis 16 aufweisen. Die Strahlteiler 11 bis 13 können auch durch Spiegel gebildet sein.

Der Strahlteiler 13 mit der Reflexionsfläche 16 dient zum Einspiegeln des Strahlengangs 17 des Lasersenders 18 in den visuellen Zielfernrohrstrahlengang 9 in Richtung des Objektivs 8. Der Sender 18 ist dazu auf einer, d. h. in der Zeichnung unteren Seite, am Bauteilträger 2 zielmarkenseitig von der Reflexionsfläche 16 befestigt, wobei die optische Achse des Senders 18 parallel zur optischen Achse 10 des Zielfernrohres verläuft. Durch eine Spiegel 19, ein Prisma oder dergleichen optische Umlenk- oder Hilfseinrichtung wird der vom Sender 18 ausgestrahlte Laserstrahl zur Reflexionsfläche 16 des Strahlteilers 13 reflektiert. Der Sender 18 wird durch eine Senderdiode gebildet.

Der Strahlteiler 12 mit der Reflexionsfläche 15 dient zum Einspiegeln des Strahlengangs 20 der anvisierten, nicht dargestellten zielreflektierten, über das Objektiv 8 empfangenen Strahlung zum Laserempfänger 21. Der Empfänger 21 ist dazu senkrecht zur optischen Achse 10 ausgerichtet und auf der dem Sender 18 gegenüberliegenden, also in der Zeichnung oberen Seite, am Bauteilträger 2 befestigt. Der Empfänger 21 wird durch eine Photodiode gebildet.

Die Reflexionsflächen 15 und 16 der Strahlteiler 12 und 13 sind so angeordnet, daß die Strahlengänge 17 und 20 des Senders 18 und des Empfängers 21 koaxial zur optischen Achse 10 des Zielfernrohres verlaufen. Das Objektiv 8 bildet damit zugleich das Objektiv für den Lasersender 18 und den Laserempfänger 21.

Durch die Anordnung der Reflexionsfläche 16 des Laserempfängers 18 in Durchsichtsrichtung des Zielfernrohres vor der Reflexionsfläche 15 für den Laserempfänger 21 bildet der Strahlengang 17 des Senders 18 einen zur optischen Achse 10 koaxialen Strahlenkegel, der von dem koaxialen Strahlenkegelmantel des Strahlengangs 20 des Laserempfängers 21 umgeben wird.

Damit die Reflexionsflächen 15 und 16 der Strahlteiler 12 und 13 des Laserentfernungsmessers das Zielfernrohr in diesem Bereich nicht abschatten, sind sie mit einer dichroitischen Beschichtung versehen, welche dazu führt, daß nur das langwellige Laserlicht von z. B. ca. 0,9 µm mit einem Reflexionsgrad R von ca. 100 % reflektiert wird, während die Reflexionsflächen 15 und 16 für das sichtbare Licht durchlässig sind, also vorzugsweise einen Transmissionsgrad T von ca. 100 % für sichtbares Licht aufweisen.

Der Strahlteiler 11 mit der Reflexionsfläche 14 dient zum Einspiegeln einer vorzugsweise als Digitalanzeige ausgebildeten Entfernungsanzeige 22 in den visuellen Zielfernrohrstrahlengang in Richtung Okular 6.

Wie insbesondere aus Figur 4 ersichtlich, verläuft der eingespiegelte Strahlengang 23 der optischen Anzeige 22 parallel zu optischen Anzeige 10 des Zielfernrohres, und zwar in der Zeichnung nach unten versetzt, so daß die optische Anzeige 22 nicht die Sicht auf den mittleren Bereich der Zielmarke 4 beeinträchtigt.

Die optische Entfernungsanzeige 22 ist am Bauteilträger 2 auf der Seite befestigt, zu der der Strahlengang 23 versetzt ist, also nach der Zeichnung auf der unteren Seite.

Durch einen Spiegel 24 oder dergleichen optische Umkehr- oder Hilfseinrichtung wird das von der Entfernungsanzeige 22 ausgesandte Licht zur Reflexionsfläche 14 umgelenkt, wobei zwischen der Entfernungsanzeige 22 und dem Spiegel 24 sowie zwischen dem Spiegel 24 und der Reflexionsfläche 14 eine abzubildende Linse 25 bzw. 26 als weitere optische Hilfseinrichtungen angeordnet sind.

Die optische Entfernungsanzeige 22 sendet Licht im langwelligen Bereich des sichtbaren Lichts, also mit einer Wellenlänge z. B. mehr als 0,65 µm aus. Die Reflexionsfläche 14 ist durch eine dichroitische Beschichtung daher so ausgebildet, daß sie das langwellige Licht der Entfernungsanzeige 22 z. B. mit einem Reflexionsgrad von z.B. 50 % teilreflektiert und für sichtbares Licht mit einer Wellenlänge von weniger als 0,65 µm einen Transmissionsgrad von ca. 100 % aufweist.

Die Bildebene des Strahlenganges 23 der Entfernungsanzeige 22 liegt in der Ebene der Zielmarke 4, also der Bildebene 7 des Objektivs 8.

Wie aus Figur 3 ersichtlich, weist der Bauteilträger 2 einen quadratischen Querschnitt auf. An den Außenflächen des Bauteilträgers 2 sind Platinen 27 bis 30 befestigt. Zum Anschluß der Platinen 27 bis 30 sind Steckverbindungen 31 bis 34 vorgesehen.

Die Platine 27 stellt dabei die Basisplatine dar. Die Platine 28 weist die Steuerelektronik für den Lasersender 18 auf, die Platine 29 die Steuerelektronik für den Laserempfänger 21 und die Platine 30 die Auswertelektronik des Laserentfernungsmessers.

Die Energiequelle wird durch Batterien 35 oder entsprechende Akkumulatoren gebildet, die am Außenrohr 1 angeordnet sind. Ferner ist an der Unterseite des Außenrohres 1 eine Montageschiene 36 vorgesehen, mit der das Zielfernrohr an dem nicht dargestellten Gewehr befestigt wird.

Nach der Montage des Zielfernrohres auf dem Gewehr muß für die Einschießentfernung der Treffpunkt mit dem Zielpunkt in Übereinstimmung gebracht werden. Dazu ist eine Justiervorrichtung vorgesehen, mit der die Zielmarke 4 oder Visierline auf den Treffpunkt justierbar ist. Diese Justiereinrichtung weist erfindungsgemäß ein gegenüber dem Gewehr bewegbares, optisches Teil zwischen der Zielmarke 4 und der Lichteintrittseite 38 des Zielfernrohres auf.

Gemäß Figur 2 ist dieses optische Teil durch das gesamte Objektiv 8 gebildet, das in einem Innenrohr 37 angeordnet ist, welches mit einem in der Zeichnung nicht dargestellten Gelenk lichteintrittsseitig am Außenrohr 1 gelagert ist.

An dem Innenrohr 37 greifen im Abstand von dem Gelenk zwei im senkrechten Winkel zueinander angeordnete Justierspindeln an, wobei in Figur 2 nur eine Justierspindel 39 zu sehen ist. Durch z. B. zwei nicht dargestellte Federn ist das Innenrohr 37 gegen die Justierspindeln federbelastet.

In Figur 2a ist eine Variante der Justiereinrichtung dargestellt. Dabei ist beispielsweise eine Teillinse des Objektivs 8 in einem ringförmigen Käfig 40 in Durchsichtsrichtung vor den restlichen Linsen des Objektivs angeordnet, die sich in einem am Außenrohr 1 befestigten Ring 41 befinden. Der Käfig 40 ist mit dem Ring 41 über Federstege 42 verbunden. Die Justierspindel 39 und die nicht dargestellte, dazu senkrechte Justierspindel greifen am Käfig 40 an.

Gemäß Figur 1 ist das Außengehäuse 1, abgesehen von dem erweiterten zylindrischen Abschnitt, der das Objektiv 8 aufnimmt, entsprechend dem Bauteilträger 2 rechteckig ausgebildet. Die Stromquelle befindet sich unter der Abdeckung 43. Während der Justierknopf 44 für die Gewindespindel 39 in Fig. 1 zu sehen ist, ist der Justierknopf für die dazu senkrechte Justierspindel verdeckt. Mit dem Druckknopf 45, der vorzugsweise an der linken Seite des Außenrohres 1 angebracht ist, kann der Laserentfernungsmesser, einschließlich der optischen Entfernungsanzeige 22 vom Schützen z.B. mit dem Daumen der linken Hand betätigt werden.

## Patentansprüche

1. Zielfernrohr für Schußwaffen mit einer Zielmarke (4), einer Einrichtung zur Justierung der Zielmarke auf den Treffpunkt und einem Laserentfernungsmesser für das Ziel mit einem Lasersender (18) und einem Laserempfänger (21), **dadurch gekennzeichnet, daß** das Zielfernrohrobjektiv (8) durch Einbringen des Strahlengangs (17) des Lasersenders (18) und des Strahlengangs (20) des Laserempfängers (21) in den visuellen Zielfernrohrstrahlengang (9) zugleich das Objektiv für den Lasersender (18) und den Laserempfänger (21) bildet, und daß die Einrichtung zur Justierung der Zielmarke (4) auf den Treffpunkt ein gegenüber der Zielmark bewegbares optisches Teil zwischen der Zielmarke (4) und der Lichteintrittsseite (38) des Zielfernrohres aufweist.

2. Zielfernrohr nach Anspruch 1, **dadurch gekennzeichnet, daß** das Einbringen des Strahlengangs (17) des Lasersenders (18) und des Strahlengangs (20) des Laserempfängers (21) in den visuellen Zielfernrohrstrahlengang (9) zwischen dem Objektiv (8) und der Zielmarke (4) erfolgt.

3. Zielfernrohr nach Anspruch 1 oder 2, **dadurch gekennzeichnet, daß** zum Einbringen des Strahlengangs (17) des Lasersenders (18) und des Strahlengangs (20) des Laserempfängers (21) in den visuellen Zielfernrohrstrahlengang (9) jeweils eine das Licht selektiv reflektierende, sichtbares durchlassende Reflexionsfläche (15, 16) im visuellen Zielfernrohrstrahlengang (9) angeordnet ist.

4. Zielfernrohr nach einem der Ansprüche 1 bis 3, **dadurch gekennzeichnet, daß** der Strahlengang (17) des Lasersenders (18) und der Strahlengang (20) des Laserempfängers (21) koaxial in den visuellen Zielfernrohrstrahlengang (9) eingebracht sind.

5. Zielfernrohr nach Anspruch 3 oder 4, **dadurch gekennzeichnet, daß** die beiden Reflexionsflächen (15, 16) hintereinander in dem visuellen Zielfernrohrstrahlengang (9) angeordnet sind.

6. Zielfernrohr nach Anspruch 1, **dadurch gekennzeichnet, daß** das gegenüber der Waffe bewegbare optische Teil der Justiereinrichtung durch wenigstens eine Teillinse des Objetivs (8) gebildet wird.

7. Zielfernrohr nach Anspruch 6, **dadurch gekennzeichnet, daß** zur Bewegung der wenigstens einen Teillinse des Objektivs (8) zwei im Winkel zueinander angeordnete Justierspindeln (39) vorgesehen sind.

8. Zielfernrohr nach Anspruch 1, **dadurch gekennzeichnet, daß** eine an die Auswertelektronik des Laserentfernungsmessers angeschlossene, in den visuellen Zielfernrohrstrahlengang (9) einbringbare optische Entfernungsanzeige (22) vorgesehen ist.

9. Zielfernrohr nach Anspruch 8, **dadurch gekennzeichnet, daß** die optische Entfernungsanzeige (22) Licht im langwelligen Bereich des sichtbaren Lichts aussendet und zum Einbringen der optischen Entfernungsanzeige (22) in den visuellen Zielfernrohrstrahlengang (9) eine das Licht der optischen Entfernungsanzeige (22) selektiv reflektierende Reflexionsfläche (14) vorgesehen ist.

10. Zielfernrohr nach einem der vorstehenden Ansprüche, **dadurch gekennzeichnet, daß** ein im Außenrohr (1) des Zielfernrohres angeordneter Bauteilträger (2) zur Aufnahme des Lasersenders (18) und Laserempfängers (21), der Steuer- und Auswertelektronik des Laserentfernungsmessers sowie des Umkehrsystems und des Okulars (6) des Zielfernrohres vorgesehen ist.

11. Zielfernrohr nach Anspruch 10, **dadurch gekennzeichnet, daß** die Elektronik des Laserentfernungsmessers auf Platinen (27 bis 30) angeordnet ist, der Bauteilträger (2) einen prismatischen Querschnitt aufweist, und die Platinen (27 bis 30) auf der Außenfläche des Bauteilträgers (2) angeordnet sind.

12. Zielfernrohr nach Anspruch 10 oder 11, **dadurch gekennzeichnet, daß** der Bauteilträger (2) einen koaxialen Kanal (3) zur Aufnahme des Umkehrsystems aufweist.

13. Zielfernrohr nach einem der vorstehenden Ansprüche, **dadurch gekennzeichnet, daß** ein Speicher vorgesehen ist, in den die ballistischen Daten der Waffe und der Munition einspeicherbar sind und die Einrichtung zur Justierung der Zielmarke (4) durch wenigstens einen Stellmotor betätigbar ist, der durch die Auswertelektronik des Laserentfernungsmessers und die in den Speicher eingespeicherten ballistischen Daten steuerbar ist.

## Claims

1. A telescopic sight for firearms having a reticle (4), a device for adjusting the reticle on the point of impact and a laser rangefinder for the target with a laser transmitter (18) and a laser receiver (21), **characterized in that** the telescopic sight objective (8) is simultaneously the objective for the laser transmitter (18) and the laser receiver (21) since the beam path (17) of the laser transmitter (18) and the beam path (20) of the laser receiver (21) are brought into the visual telescopic sight beam path (9), and the device for adjusting the reticle (4) on the point of impact has an optical member movable relative to the reticle between the reticle (4) and the light entrance side (38) of the telescopic sight.

2. A telescopic sight according to claim 1, **characterized in that** the beam path (17) of the laser transmitter (18) and the beam path (20) of the laser receiver (21) are brought into the visual telescopic sight beam path (9) between the objective (8) and the reticle (4).

3. A telescopic sight according to claim 1 or 2, **characterized in that** for bringing the beam path (17) of the laser transmitter (18) and the beam path (20) of the laser receiver (21) into the visual telescopic sight beam path (9) a reflection surface (15, 16) selectively reflecting the light and passing visible light is disposed in the visual telescopic sight beam path (9) in each case.

4. A telescopic sight according to any of claims 1 to 3, **characterized in that** the beam path (17) of the laser transmitter (18) and the beam path (20) of the laser receiver (21) are brought into the visual telescopic sight beam path (9) coaxially.

5. A telescopic sight according to claim 3 or 4, **characterized in that** the two reflection surfaces (15, 16) are disposed one behind the other in the visual telescopic sight beam path (9).

6. A telescopic sight according to claim 1, **characterized in that** the optical member of the adjusting device movable relative to the weapon is formed by at least one partial lens of the objective (8).

7. A telescopic sight according to claim 6, **characterized in that** two adjusting spindles (39) disposed at an angle to each other are provided for moving the at least one partial lens of the objective (8).

8. A telescopic sight according to claim 1, **characterized in that** it is provided with an optical distance display (22) connected to the evaluation electronics of the laser rangefinder and adapted to be brought into the visual telescopic sight beam path (9).

9. A telescopic sight according to claim 8, **characterized in that** the optical distance display (22) emits light in the long-wave range of visible light, and a reflection surface (14) selectively reflecting the light of the optical distance display (22) is provided for bringing the optical distance display (22) into the visual telescopic sight beam path (9).

10. A telescopic sight of any of the above claims, **characterized in that** a component carrier (2) disposed in the outer tube (1) of the telescopic sight is provided for receiving the laser transmitter (18) and laser receiver (21), the control and evaluation electronics of the laser rangefinder as well as the erecting system and the eyepiece (6) of the telescopic sight.

11. A telescopic sight according to claim 10, **characterized in that** the electronics of the laser rangefinder is disposed on boards (27 to 30), the component carrier (2) has a prismatic cross section, and the boards (27 to 30) are disposed on the outside surface of the component carrier (2).

12. A telescopic sight according to claim 10 or 11, **characterized in that** the component carrier (2) has a coaxial duct (3) for receiving the erecting system.

13. A telescopic sight according to any of the above claims, **characterized in that** a memory is provided in which the ballistic data of the weapon and the ammunition are storable, and the device for adjusting the reticle (4) is operable by at least one servomotor which is controllable by the evaluation electronics of the laser rangefinder and the ballistic data stored in the memory.

## Revendications

1. Lunette de visée pour armes à feu avec un repère de visée (4), un appareil pour régler le repère de visée sur le point d'impact et un appareil télémétrique à laser pour la cible avec un émetteur laser (18) et un récepteur laser (21), **caractérisée en ce que** l'objectif (8) de la lunette de visée forme, par intégration de la trajectoire de faisceau (17) de l'émetteur laser (8) et de la trajectoire de faisceau (20) du récepteur laser (21) dans la trajectoire de faisceau visuelle (9) de la lunette de visée, simultanément l'objectif pour l'émetteur laser (18) et le récepteur laser (21), et **en ce que** l'appareil de réglage du repère de visée (4) sur le point d'impact présente une partie optique déplaçable par rapport au repère de visée et se situant entre le repère de visée (4) et le côté d'incidence de la lumière (38) de la lunette de visée.

2. Lunette de visée selon la revendication 1, **caractérisée en ce que** l'intégration de la trajectoire de faisceau (17) de l'émetteur laser (8) et de la trajectoire de faisceau (20) du récepteur laser (21) dans la trajectoire de faisceau visuelle (9) de la lunette de visée se fait entre l'objectif (8) et le repère de visée (4).

3. Lunette de visée selon la revendication 1 ou 2, **caractérisée en ce que**, pour intégrer la trajectoire de faisceau (17) de l'émetteur laser (18) et la trajectoire de faisceau (20) du récepteur laser (21) dans la trajectoire de faisceau visuelle (9) de la lunette de visée, on agence respectivement une surface de réflexion (15, 16) réfléchissant sélectivement la lumière et laissant passer la lumière visible dans la trajectoire de faisceau visuelle (9) de la lunette de visée.

4. Lunette de visée selon l'une quelconque des revendications 1 à 3, **caractérisée en ce que** la trajectoire de faisceau (17) de l'émetteur laser (18) et la trajectoire de faisceau (20) du récepteur laser (21) sont intégrées coaxialement dans la trajectoire de faisceau visuelle (9) de la lunette de visée.

5. Lunette de visée selon la revendication 3 ou 4, **caractérisée en ce que** les deux surfaces de réflexion (15, 16) sont aménagées l'une derrière l'autre dans la trajectoire de faisceau visuelle (9) de la lunette de visée.

6. Lunette de visée selon la revendication 1, **caractérisée en ce que** la partie optique de l'appareil de réglage déplaçable par rapport à l'arme est formée par au moins une lentille partielle de l'objectif (8).

7. Lunette de visée selon la revendication 6, **caractérisée en ce que**, pour déplacer la ou au moins une lentille partielle de l'objectif (8), il est prévu deux axes de réglage (39) aménagés selon un angle mutuel.

8. Lunette de visée selon la revendication 1, **caractérisée en ce qu'**il est prévu un affichage de distance optique (22) qui est raccordé à l'électronique d'exploitation de l'appareil télémétrique à laser et peut être intégré dans la trajectoire de faisceau visuelle (9) de la lunette de visée.

9. Lunette de visée selon la revendication 8, **caractérisée en ce que** l'affichage de distance optique (22) émet de la lumière dans la zone de grandes longueurs d'onde de la lumière visible et il est prévu, pour intégrer l'affichage de distance optique (22) dans la trajectoire de faisceau visuelle (9) de la lunette de visée, une surface de réflexion (14) réfléchissant de manière sélective la lumière de l'affichage de distance optique (22).

10. Lunette de visée selon l'une quelconque des revendications précédentes, **caractérisée en ce qu'**il est prévu un porte-composants (2) aménagé dans le tube externe (1) de la lunette de visée pour recevoir l'émetteur laser (18), le récepteur laser (21), l'électronique de commande et d'exploitation de l'appareil télémétrique à laser ainsi que le système d'inversion et l'oculaire (6) de la lunette de visée.

11. Lunette de visée selon la revendication 10, **caractérisée en ce que** l'électronique de l'appareil télémétrique à laser est aménagée sur des platines (27 à 30), le porte-composants (2) présente une section transversale prismatique et les platines (27 à 30) sont aménagées sur la surface externe du porte-composants (2).

12. Lunette de visée selon la revendication 10 ou 11, **caractérisée en ce que** le porte-composants (2) présente un canal coaxial (3) pour recevoir le système d'inversion.

13. Lunette de visée selon l'une quelconque des revendications précédentes, **caractérisée en ce qu'**il est prévu une mémoire dans laquelle les données balistiques de l'arme et de la munition peuvent être mémorisées et l'appareil de réglage du repère de visée (4) peut être commandé par au moins un moteur de réglage, qui peut être commandé par l'électronique d'exploitation de l'appareil télémétrique à laser et par les données balistiques mémorisées dans la mémoire.
